# EUROPEAN PATENT SPECIFICATION

(11) **EP 0 536 733 B1**
(45) Date of publication and mention of the grant of the patent: **27.05.1998**
(21) Application number: 92117139.3
(22) Date of filing: 07.10.1992
(51) Int. Cl.: H04N 1/40

(54) **Method for controlling an image forming apparatus**
Verfahren zum kontrollieren eines Bilderzeugungsgeräts
Méthode de contrôle d'un appareil de formation d'images

(30) Priority: 08.10.1991 JP 289207/91; 22.10.1991 JP 302350/91
(43) Date of publication of application: 14.04.1993
(73) Proprietor: CANON KABUSHIKI KAISHA, Tokyo (JP)
(72) Inventor: Nakano, Masao, c/o Canon Kabushiki Kaisha, Ohta-ku, Tokyo 146 (JP)
(74) Representative: Tiedtke, Harro, Dipl.-Ing.

(56) References cited:
- EP-A- 0 264 886
- EP-A- 0 269 033
- EP-A- 0 420 573
- US-A- 4 751 377
- PATENT ABSTRACTS OF JAPAN vol. 7, no. 214 (E-199)(1359) 21 September 1983 & JP-A-58 106 953

## Description

### BACKGROUND OF THE INVENTION

### Field of the Invention

The present invention relates to a method for controlling an image forming apparatus of digital type, and more particularly, it relates to a method carried out by an image forming apparatus having a table for coordinating or corresponding an image signal from a reading means to a recording means.

### Related Background Art

From document EP-A-0 264 886 a laser beam scanning method and apparatus are known for recording a continuous tone image by scanning a laser beam emitted by a semiconductor laser on a photosensitive material by a beam scanning system, and controlling a drive current for the semiconductor laser based on a light emission level instructing signal corresponding to an image signal, thereby to modulate the intensity of the laser beam. The laser beam intensity is detected, and a feedback signal corresponding to the detected intensity is fed back to the light emission level instruction signal. The light emission level instruction signal is corrected by a correction table to compensate for nonlinearity of drive current-optical output characteristics of the semiconductor laser and/or nonlinearity of incident light intensity-optical transmittance characteristics of an optical element of the beam scanning system, thereby to make linear the relationship between the intensity of the laser beam based on the corrected light emission level instructing signal and the uncorrected light emission level instruction signal.

Document EP-A-O 269 033 shows an exposure control system which permits accurate reproduction of optical density levels on a final image. Said system is characterized by a dynamically corrected look-up table. The look-up table is used to calculate each desired exposure intensity level for each image pixel on the basis of data obtained during the exposure and development of an immediately preceding image.

Document US-A-4,751,377 shows that in a light beam scanning recording apparatus, a light beam is modulated by a modulator according to image signals and is caused to scan a photosensitive recording material, and the recording material is developed. The apparatus is provided with a signal converting section which converts image signals to be input into the modulator according to a predetermined conversion table so that desired image densities can be obtained on the recording material. Furthermore, a test pattern signal generating section which generates test pattern signals bearing thereon different image densities and inputs them into the modulator as well as an image density measuring system which measures the image densities of the test pattern on the recording material developed after scanning by a light beam modulated according to the test pattern signal are provided. In addition, a conversion table making section is provided which determines, on the basis of the relation between the test pattern signals and the image densities of the test pattern measured by the image density measuring system and desired image signal-image density characteristics, the image signals corresponding to the image densities obtained by the respective test pattern signals referring to the desired image signal-image density characteristics, thereby obtaining the relation between the image signals and the test pattern signals, and makes the conversion table on the basis of the relation between the image signals and the test pattern signal.

Furthermore, in the past, in some image forming apparatus of digital type, a conversion table is provided for coordinating an image signal from a reading means for reading an original to a recording means. However, due to deterioration and/or contamination of parts in the apparatus and the change in environmental conditions, such conversion table cannot perform the proper conversion, thus arising a problem that an outputted image differs froma desired one.

As an example, in some image forming apparatus of digital type, an image signal conversion table (referred to as "LUT" or "look up table" hereinafter) is used for correcting the output property of the apparatus and for emphasizing a specific density area. In such image forming apparatus, generally, an image reading means, an image treating means, an image writing means and the like are provided, and the look-up table is incorporated into the image treating means and serves to convert an input image signal inputted from the image reading means to the image treating means into an output image signal which is in turn inputted to the image writing means.

In order to eliminate the difference between input image density and the output image density, it is known that the image signal must be converted by the look-up table.

However, since the look-up table is formed in consideration of the output property of the printer, if the output property of the printer is varied, for example, by the "deterioration and/or contamination" of an image forming means of the printer, the look-up table cannot perform the proper correction. Further, if the value to be corrected is too great (for example, when the actual output property greatly deviated from the ideal output property (straight line) should be corrected to a value on the straight line), the look-up table has the tendency to emphasize the minor change in the output property greatly, and thus, the look-up table is not suitable in the practical use.

Further, also in an image forming apparatus having a light amount table for coordinating an image density signal from a reading means to a laser amount of a recording means, when parts of the apparatus are deteriorated or the environmental conditions are changed, the light amount table cannot operate correctly, thus arising a problem that a proper image cannot be reproduced.

### SUMMARY OF THE INVENTION

An object of the present invention is to provide a method for controlling an image forming apparatus having a light amount table, which can reproduce the proper image even if the property of the apparatus is varied.

This object is achieved by a method as defined in claim 1.

The other objects of the present invention will be apparent from the following descriptions.

### BRIEF DESCRIPTION OF THE DRAWINGS

Fig. 1 is a schematic elevational sectional view of an image forming apparatus adapted for carrying out the method of the present invention;
Figs. 2A to 2D are explanatory views for explaining a semi-conductor laser used with the apparatus of Fig. 1;
Fig. 3 is a circuit diagram of a laser driver circuit of the apparatus of Fig. 1;
Fig. 4 is a flow chart showing the operation of the image forming apparatus of Fig. 1;
Fig. 5A is a graph showing a table for determining an APC target value, used with the image forming apparatus of Fig. 1, and Fig. 5B is a graph showing a light amount correction result according to the apparatus of Fig. 1;
Fig. 6 is a graph showing a light amount table used with another embodiment of the method of the present invention;
Fig. 7 is a graph showing a light amount table used with a further embodiment of the method of the present invention;
Fig. 8 is a graph showing a light amount table used with a still further embodiment of the method of the present invention; and
Fig. 9A is a view showing part 53 of Fig. 3, and Fig. 9B is a view showing a laser driver circuit regarding the graph of Fig. 8.

### DETAILED DESCRIPTION OF THE PREFERRED EMBODIMENT

The present invention will now be explained in connection with embodiments thereof with reference to the accompanying drawings.

Next, an image forming apparatus having a light amount table will be explained.

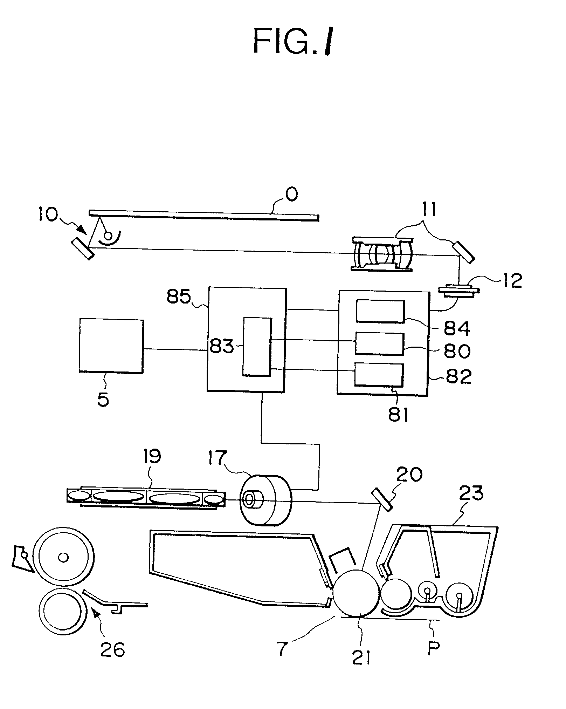

Fig. 1 shows an apparatus for carrying out a method according to an embodiment of the present invention. In Fig. 1, the reference numeral 10 denotes a lighting device 10 for lighting an original rested on an original glass support 0; 11 denotes an optical system for projecting an original image; 12 denotes a CCD (reading means) for cooperating with the optical system to convert the original image into an electric signal of eight-bit with the resolving power of 400 dpi; 84 denotes an image treating device for treating an image signal; and 85 denotes a laser driver circuit for driving a semi-conductor laser unit (laser light source) 17 in response to the image signal. The image treating device 84 is incorporated into a CPU 82, together with a memory 80 storing a light amount table corresponding to the image density, and a calculating means 81. The laser driver circuit 85 incorporates therein an auto power controller (referred to as "APC" hereinafter) 83 acting as a control means for monitoring the light amount of the laser and for correcting the light amount of the semi-conductor laser unit 17 on the basis of the comparison result from the calculating means 81.

A laser beam emitted from the semi-conductor laser unit 17 is deflected by a rotating polygonal reflection mirror 19 and then is sent to a photosensitive drum 21 via a mirror 20. The reference numeral 7 denotes an electrophotographic image forming portion; 23 denotes a developing device; 26 denotes a fixing device; and 5 denotes an image signal generating device (generating means) for generating any image signal (reference signal) at any pattern.

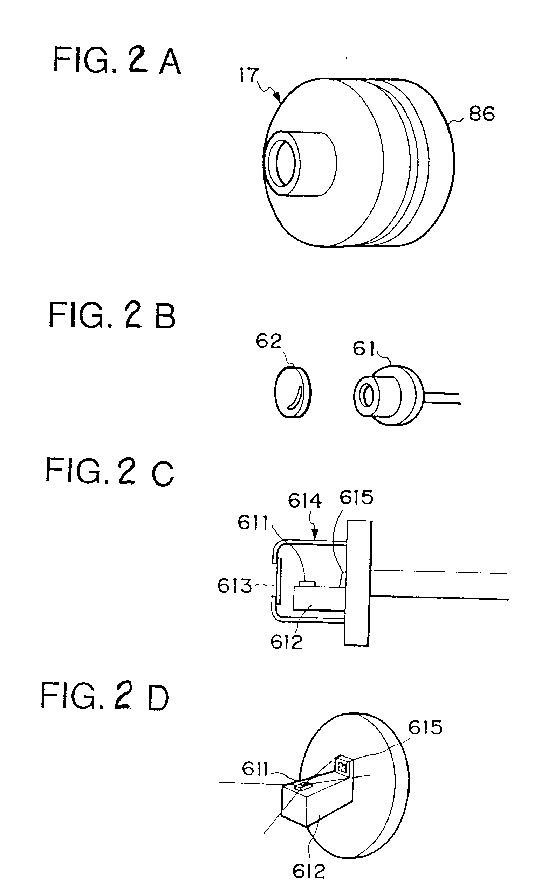

Figs. 2A to 2D are views for explaining the semi-conductor laser unit 17. Fig. 2A shows an appearance of the laser unit. The semi-conductor laser unit 17 comprises a semi-conductor laser element 61 and a collimator lens 62 (Fig. 2B) which are housed in a lens-barrel 86 (Fig. 2A). As shown in Fig. 2C, the semi-conductor laser element 61 includes a semi-conductor laser chip 611 mounted on a stay 612 made of copper. The laser beams are emitted forwardly and rearwardly as shown in Fig. 2D. The forward laser beam comes out from a case 614 through a window 613, and the rearward laser beam is illuminated on a laser light intensity monitoring pin photodiode (referred to as "PD" hereinafter) 615. Incidentally, the wave length of the semi-conductor laser is 780 nm.

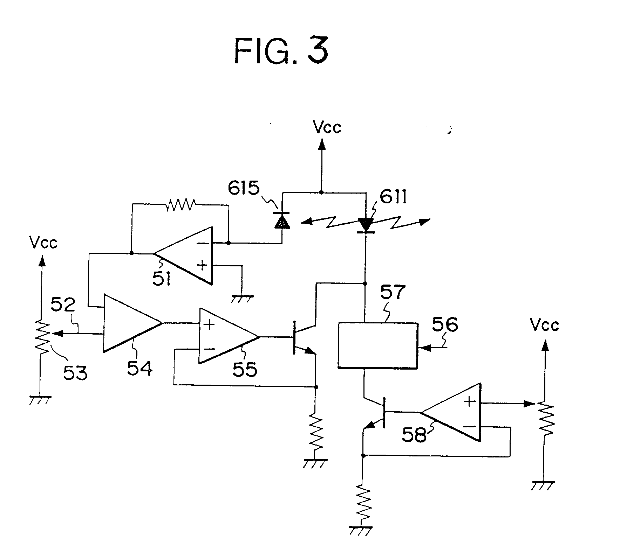

Fig. 3 is a circuit diagram for explaining the semi-conductor laser driver circuit 85. The APC 83 operates as follows. The above-mentioned semi-conductor laser chip 611 and DP 615 are depicted in the circuit. When the output is emitted from the DP 615, a current proportional to the laser light amount is inputted to a current/voltage converter 51. The reference numeral 52 denotes a target value for the light amount of the emitted laser, which is set by a volume 53. The actual light amount is compared with the target value by a comparator 54, and an output from the comparator 54 controls a constant current circuit 55. The constant current circuit 55 acts as a bias current source for the semi-conductor laser. The reference numeral 56 denotes a data signal for turning the laser ON/OFF; and 57 denotes a high speed switching element of GaAs system for controlling the current in response to the data signal (voltage signal). A constant current circuit 58 provides a drive current for turning the semi-conductor laser ON/OFF.

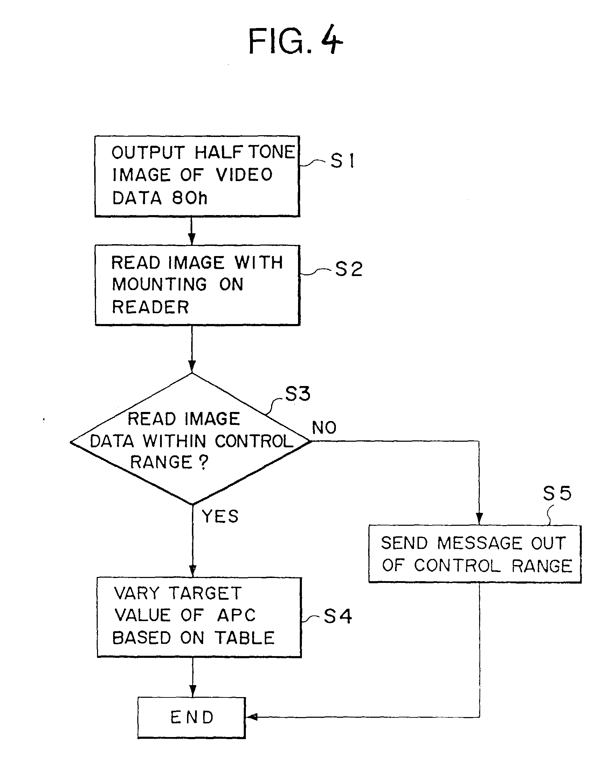

Next, the operation of the image forming apparatus of Fig, 1 will be explained with reference to a flow chart shown in Fig. 4. When any check reference signal (for example, check reference signal regarding a halftone image) is emitted from the image signal generating device 5, the semi-conductor laser unit 17 emits the laser light to form an image on the photosensitive drum 21 (step S1). In this case, the light amount of the laser is monitored by the APC 83.

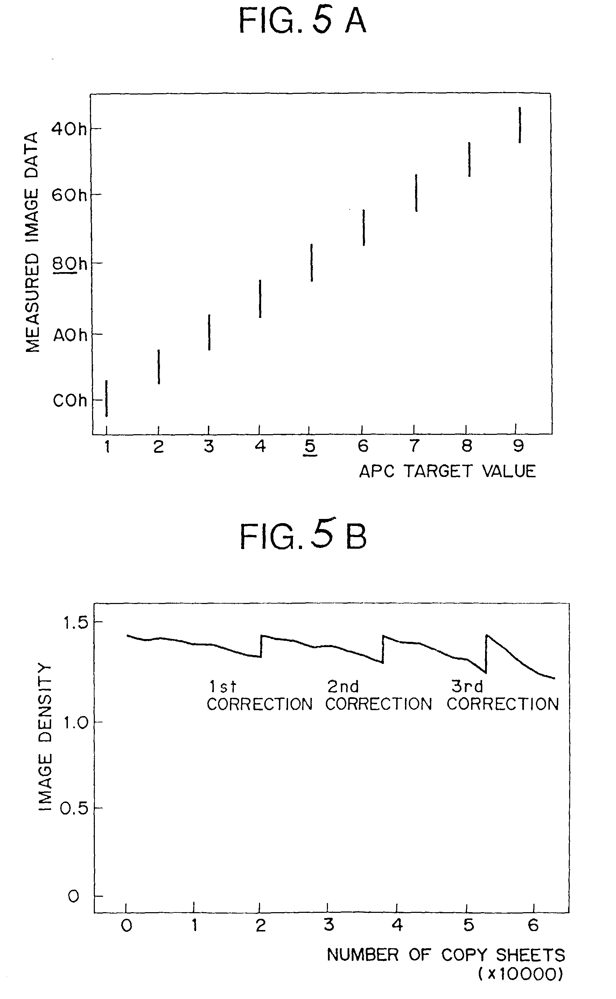

The formed image is transferred onto a recording sheet P. This recording sheet is then rested on the original glass support 0, and the image on the recording sheet is read by the lighting device 10 and the optical system 11 photoelectrically (step S2). The read image is converted into the image signal by the conversion means, and the density data of the image is compared with the light amount table in the memory 80 (Fig. 5A) by the calculating means 81 (step S3). If the read image data is within a control range, the APC 83 corrects the laser light amount (upon the emission of the check signal) on the basis of the comparison result from the calculating means 81.

Next, a method for judging whether the read image data is within the control range or not will be described hereinbelow. In Fig. 5A, the measured image data is of eight-bit from 0 to 255 (0 is all white, 255 is all black, and the other are grey steps).

Now, for facilitating the understanding, the data has normally a HEX (hexadecimal) form. As shown in the flow chart (Fig. 4), since the output image is outputted as the data of 80h (just mid-density), if the image forming apparatus is normal, the read value should be 80h (underlined) (it has been so set initially). The target value of the APC 83 is initially set at 5. In this condition, the laser 17 can be powered up by 4 steps at the maximum. In other words, the reserve power of the APC target value is +4. This graph of Fig. 5A indicates that, if the density of the image is decreased due to the deterioration of the image forming apparatus or the like, the control can be effected by the read value of 40h. In this way, since the upper limit of the control depends upon the upper limit of the laser power, the upper limit of the control can be determined in dependence upon the APC target value when the image is read, as follows:$\text{80h - (9 - present target value) x 10h} \text{= upper limit of control range}$

Since, if the APC target value excedes 9, it is feared that the semi-conductor laser unit 17 is broken, when the control to be performed is out of this control range, a message for checking the image forming apparatus is emitted (step S5 in Fig. 4).

Fig. 5B shows the transition or change in the image density in this embodiment. The endurance test was effected by using the standard 4% original, and the maximum density Dₘₐₓ was measured each 1000 copy sheets. In Fig. 5B, the corrections of the image density were effected at 20000, 38000 and 53000 copy sheets, respectively. In any case, the proper image density was restored only by the single feedback.

In this way, even when the deterioration of the apparatus and/or the change in the environmental condition occurs, since the laser light amount is corrected on the basis of the actually outputted image density on the recording sheet and the light amount table, it is possible to always obtain the stable density gradation. Particularly, in this embodiment, the laser light amount is adjusted not merely by changing the current value, but by changing the target value of the APC means, even when the laser element itself is deteriorated for a long time, it is possible to expose the photosensitive drum with proper laser light amount, and thus, to form an image having the stable density gradation.

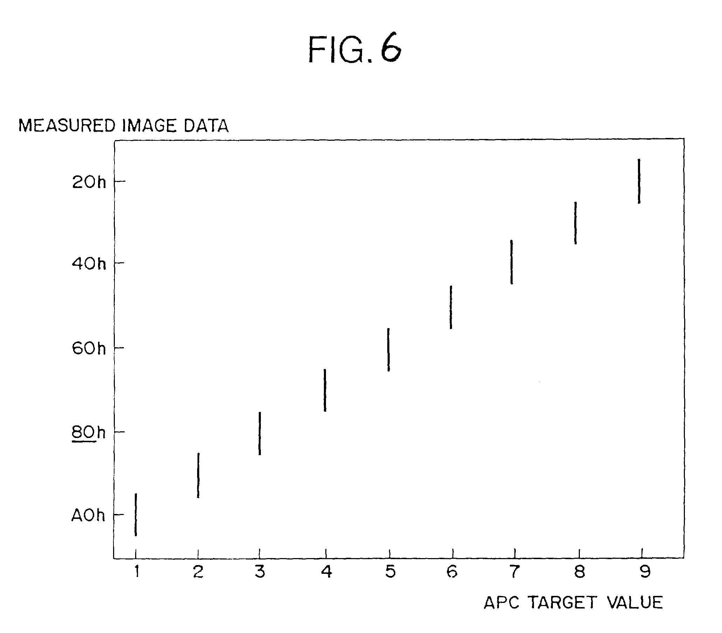

In the illustrated embodiment, the deterioration of the image due to endurance revealed itself as the reduction in the image density for the most part (90% or more). Thus, the APC target values 1 to 4 in the table of Fig. 5A were almost not used. Accordingly, in an embodiment shown in Fig. 6, by setting the initial target value of the APC 83 to 3, it is possible to widen the range of the correction for the reduction in density.

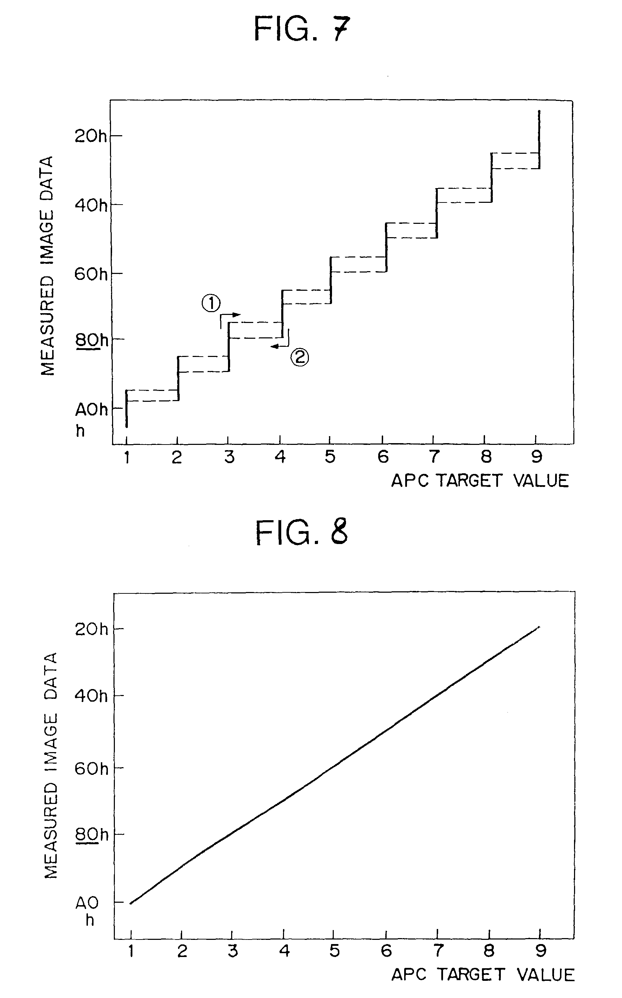

In the embodiments shown in Fig. 5A and Fig. 6, it was found that the feedback sometimes became unstable in the vicinity of the density regarding the switching of the APC target value. To avoid this, in an embodiment shown in Fig. 7, the hysteresis is provided in the APC target value changing table (Fig. 7).

When the measured image data becomes smaller (changes upwardly in the graph), the APC target value is changed along an upper broken line (①); whereas, when the measured image data becomes greater, the APC target value is changed along a lower broken line (②). By this hysteresis control, it is possible to obtain the stable feedback even in the vicinity of the density regarding the switching of the APC target value.

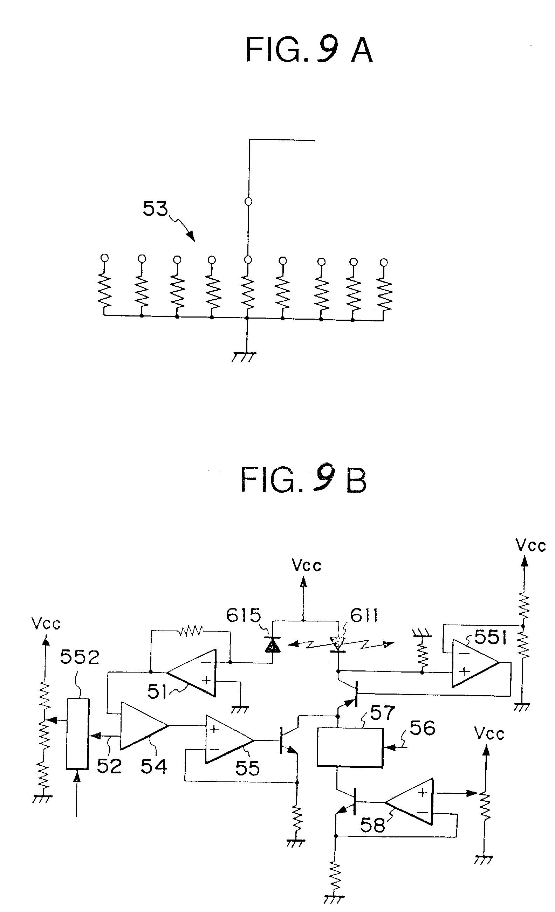

In the above-mentioned embodiments shown in Fig. 5A, Fig. 6 and Fig. 7, the APC value was previously set to have a predetermined resistance value, as shown in Fig. 9A (showing the details of the part 53 of Fig. 3), for the reason that the excessive current is prevented from flowing in the semi-conductor laser unit 17. Thus, the APC target values were desultory values.

In the circuit shown in Fig. 9B, a limiter circuit 551 is added to the APC circuit. Since the excessive current is prevented from flowing in the semi-conductor laser unit 17 by the limiter circuit 551, the setting values of the APC 83 can be continuously changed by a soft volume 552. A table used in this apparatus is shown in Fig. 8. Since the APC target value can be changed continuously, the control can be effected more smoothly. Incidentally, the laser light source is not limited to the semi-conductor laser, but may be a gas laser, a pigment laser or the like.

While the present invention was explained in connection with specific embodiments, it is not limited to these embodiments, but various alterations can be effected within the scope of the present invention.

## Claims

1. A method for controlling an image forming apparatus, comprising:
emitting by a laser beam generating means (**611**) a laser beam of the same amount from a front and a rear thereof in response to an image signal;
detecting by a light amount detecting means (**615**) a light amount of the rear beam emitted from said laser beam generating means (**611**);
controlling by control means (**55**) the power supplied to said laser beam generating means (**611**) on the basis of a comparison result between the detected light amount of said light amount detecting means (**615**) and an actual light amount target value (**52**);
generating by image signal generating means (**5**) a reference image signal; and
forming by image forming means (**7**) an image by emitting the front beam emitted from said laser beam generating means (**611**) in response to an image signal;
**characterized by** the steps of
forming a reference image onto a recording sheet by emitting the front beam from said laser beam generating means (**611**) in response to said reference image signal generated by said image signal generating means (**5**);
obtaining density data of said reference image by converting image light obtained by optically scanning said reference image formed on said recording sheet into an electric image signal;
comparing said density data with data of a light amount table (**80**); and
changing said actual light amount target value (**52**) on the basis of the comparison result between said density data and said light amount table data.

2. A method according to claim 1, **characterized by** the further steps of determining whether said obtained density data is within a control range, and of changing said actual light amount target value only if the obtained density data is within said control range.

3. A method according to claim 2, **characterized by** the further step of calculating the upper limit of the control range on the basis of said obtained density data and said actual light amount target value.

4. A method according to any one of the preceding claims, **characterized in that** a hysteresis is provided in the light amount table data.

## Patentansprüche

1. Verfahren zur Steuerung einer Bilderzeugungsvorrichtung mit
Aussenden eines Laserstrahls durch eine Laserstrahlerzeugungseinrichtung (611) mit jeweils derselben Stärke an deren Vorderseite und Rückseite im Ansprechen auf ein Bildsignal,
Erfassen einer Lichtstärke des von der Laserstrahlerzeugungseinrichtung (611) ausgesendeten, rückwärtigen Strahl durch eine Lichtstärkeerfassungseinrichtung (615),
Steuern der der Laserstrahlerzeugungseinrichtung (611) zugeführten Energie durch eine Steuereinrichtung (55) auf der Grundlage eines Vergleichsergebnis zwischen der durch die Lichtstärkeerfassungseinrichtung (615) erfaßten Lichtstärke und einem tatsächlichen Lichtstärkesollwert (52),
Erzeugen eines Bezugsbildsignals durch eine Bildsignalerzeugungseinrichtung (5) und
Erzeugen eines Bilds durch eine Bilderzeugungseinrichtung (7) durch Aussenden des von der Laserstrahlerzeugungseinrichtung (611) ausgesendeten, vorderen Strahls im Ansprechen auf ein Bildsignal,
**gekennzeichnet durch** die Schritte
Erzeugen eines Bezugsbilds auf einem Aufzeichnungsblatt durch Aussenden des vorderen Strahls von der Laserstrahlerzeugungseinrichtung (611) im Ansprechen auf das durch die Bildsignalerzeugungseinrichtung (5) erzeugte Bezugsbildsignal,
Erhalten von Dichtedaten des Bezugsbilds durch Umwandeln von Bildlicht, das durch optisches Abtasten des auf dem Aufzeichnungsblatt erzeugten Bezugsbilds erhalten wurde, in ein elektrisches Bildsignal,
Vergleichen der Dichtedaten mit Daten einer Lichtstärketabelle (80), und
Verändern des tatsächlichen Lichtstärkesollwerts (52) auf der Grundlage des Vergleichsergebnis zwischen den Dichtedaten und den Lichtstärketabellendaten.

2. Verfahren nach Anspruch 1,
**gekennzeichnet durch** die weiteren Schritte
Bestimmen, ob die erhaltenen Dichtedaten innerhalb eines Steuerbereichs liegen, und
Verändern des tatsächlichen Lichtstärkesollwerts nur, falls die erhaltenen Dichtedaten innerhalb des Steuerbereichs liegen.

3. Verfahren nach Anspruch 2,
**gekennzeichnet durch** den weiteren Schritt
Berechnen der oberen Grenze des Steuerbereichs auf der Grundlage der erhaltenen Dichtedaten und des tatsächlichen Lichtstärkesollwerts.

4. Verfahren nach einem der vorangehenden Ansprüche,
**dadurch gekennzeichnet, daß**
eine Hysterese bezüglich der Lichtstärketabellendaten vorliegt.

## Revendications

1. Procédé de commande d'un appareil de formation d'images, comportant :
l'émission par un moyen (611) de génération d'un faisceau laser d'un faisceau laser de la même valeur de l'avant à l'arrière de celui-ci en réponse à un signal d'image ;
la détection, par un moyen (615) de détection de quantité de lumière, d'une quantité de lumière du faisceau arrière émis depuis ledit moyen (611) de génération de faisceau laser ;
la commande par un moyen de commande (55) de la puissance fournie audit moyen (611) de génération de faisceau laser sur la base d'un résultat de comparaison entre la quantité de lumière détectée dudit moyen (615) de détection de quantité de lumière et une valeur réelle (52) de consigne de la quantité de lumière ;
la génération, par un moyen (5) de génération de signal d'image, d'un signal d'image de référence ; et
la formation, par un moyen (7) de formation d'images, d'une image en émettant le faisceau avant émis depuis ledit moyen (611) de génération de faisceau laser en réponse à un signal d'image ;
caractérisé par les étapes dans lesquelles
on forme une image de référence sur une feuille d'enregistrement en émettant le faisceau avant depuis ledit moyen (611) de génération de faisceau laser en réponse audit signal d'image de référence généré par ledit moyen (5) de génération de signal d'image ;
on obtient des données de densité de ladite image de référence en convertissant la lumière d'une image obtenue par un balayage optique de ladite image de référence formée sur ladite feuille d'enregistrement, en un signal d'image électrique ;
on compare lesdites données de densité à des données d'une table (80) de quantités de lumière ; et
on modifie ladite valeur réelle (52) de consigne de quantité de lumière sur la base du résultat de la comparaison entre lesdites données de densité et lesdites données de la table de quantité de lumière.

2. Procédé selon la revendication 1, caractérisé par les autres étapes dans lesquelles on détermine si lesdites données de densité obtenues sont comprises dans une plage de commande, et on modifie ladite valeur réelle de consigne de quantité de lumière uniquement si les données de densité obtenues sont comprises dans ladite plage de commande.

3. Procédé selon la revendication 2, caractérisé par l'autre étape dans laquelle on calcule la limite supérieure de la plage de commande sur la base desdites données de densité obtenues et de ladite valeur réelle de consigne de quantité de lumière.

4. Procédé selon l'une quelconque des revendications précédentes, caractérisé en ce qu'une hystérésis est prévue dans les données de la table de quantités de lumière.
